# EUROPEAN PATENT SPECIFICATION

(11) **EP 3 119 704 B1**
(45) Date of publication and mention of the grant of the patent: **12.08.2020**
(21) Application number: 15713033.7
(22) Date of filing: 22.01.2015
(51) Int. Cl.: B65G 1/137, G07F 17/00

(54) **EVOLVING MOBILE UNIT FOR CONTROLLED PRODUCT STORAGE AND DISPENSING**
VERBESSERTE MOBILE EINHEIT ZUR KONTROLLIERTEN PRODUKTLAGERUNG UND -AUSGABE
UNITÉ MOBILE ÉVOLUTIVE PERMETTANT UN STOCKAGE ET UNE DISTRIBUTION RÉGULÉS D'UN PRODUIT

(30) Priority: 24.01.2014 PT 10742214
(43) Date of publication of application: 25.01.2017
(73) Proprietor: Picklog, Lda, 1990-083 Lisboa (PT)
(72) Inventor: LOPES RIBEIRO, Pedro, 4700-151 Braga (PT)
(74) Representative: Pereira da Cruz, Joao
(86) International application number: PCT/PT2015/000008
(87) International publication number: WO 2015/112035

(56) References cited:
- EP-A1- 2 256 703
- EP-A1- 2 404 589
- WO-A1-2009/065145
- CN-A- 102 923 430
- JP-A- 2003 081 429
- US-A- 5 805 455
- US-A1- 2011 178 630

## Description

### Background / Field of the invention

The present invention relates to a mobile unit for controlled product storage and dispensing according to the preamble of claim 1.

The present invention is developed to fully respond to the complex and changing logistic requirements of high value and controlled products. In general terms, nowadays there are three different categories of intra- organizational logistic systems: manual, semi-automated and fully-automated. The typical systems range from fairly cheap and simple shelving systems, to the very expensive and complex fully automated systems, but in general tend to have very little flexibility and scope for evolution, and no mobility at all.

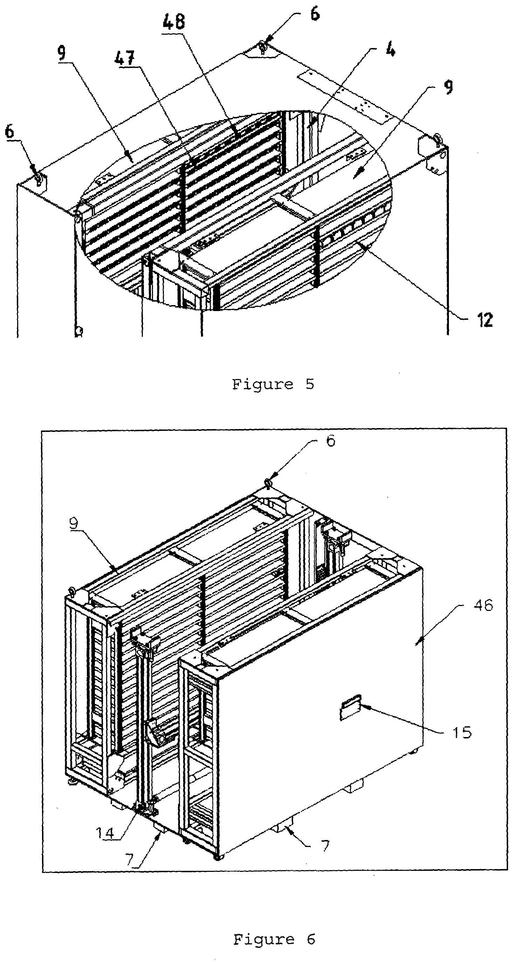

It is an objective of the present invention to provide a flexible and evolving solution, with an affordable and simple base to start, and within that base, has the possibility to evolve up to a fully automated system. The basic Unit has a manual shelving system, with a computer controlled warehouse management system (WMS), integrated or not with an Enterprise Resource Planning (ERP). The unit according to the invention comprises a Pick to Light system (fig. 5) controlled by the WMS and optionally integrated with the ERP for manual assisted operation.

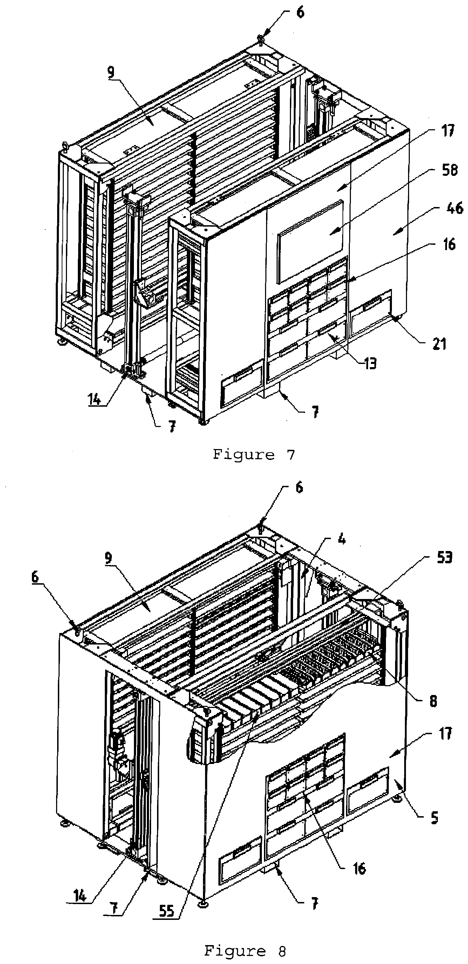

The unit according to the invention comprises a three axes Cartesian coordinate robot (14) retrieving the ULs from the multiple locations at the shelving modules (9) and transferring them into a picking zone, for manual picking product by product, controlled by a computer and WMS with optional integration with the ERP. For higher volume of work, this system can further evolve within the same base, adding one or more workstations equipped with a set of computer controlled drawers (Fig.7). The Cartesian coordinate robot (14) retrieves the ULs from their storage locations at the shelving modules (9) and transfers them into a set of drawers (16), for controlled manual picking product by product, managed by a computer and WMS with optional integration with the ERP. According to customer needs, the system can even further evolve to a fully-automated system (fig. 8), using a three axes Cartesian coordinate robot (14 plus an automated picking system that retrieves the products from inside the ULs and transfers them to the Order Loads (OL) order by order, and when complete moves them to a set of drawers (16), controlled by a computer and optionally WMS integrated with the ERP.

It is another objective of the present invention to be a fully mobile Unit. Warehouses are commonly a part of a building, or in a construction site temporary makeshift buildings or tents are used. The present invention allows the use of the Unit as a deployable ready to use, warehouse and dispenser, avoiding costly and rigid construction work, simultaneously providing the ability to easily change the Unit's placement within the building or to transport it to another location (e.g.: building or construction site). The Unit can be transported fully loaded, ready for immediate entry into operation upon arrival on location. This feature is especially useful, but not exclusively, for spare parts or equipment storage and management on remote building, oil drilling and mining sites, allowing for a fast and easy way to support remote operations.

It is another objective of the present invention, as an additional version, to be fully capable of operation in all-weather, all-terrain, and heavy duty operations. This feature is especially useful, but not exclusively, for Field Hospital Pharmacy or spare parts storage and management on relief, disaster, conflict and humanitarian operations, as well as any other industrial, military or defense application, allowing for fast and easy deployment, with fully loaded Units transported by land, sea or air.

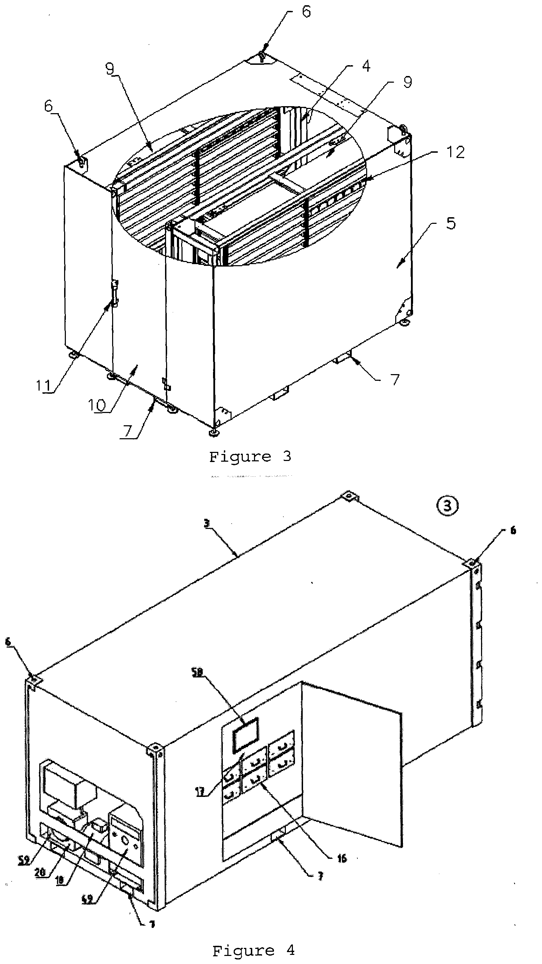

It is another objective of the present invention, to have a fully autonomous version in order to enhance its all- weather, all-terrain, and heavy duty capabilities (fig. 4). Relief, disaster, conflict and humanitarian operations or remote building, oil drilling and mining sites, usually lack any kind of support infrastructure, like energy. To cope with such limitations and allow the Unit to remain fully operational, the present invention can also, but not exclusively, integrate autonomous systems for power generation (49), compressed air generation (18), internal temperature control (19) and internal humidity control (20). These autonomous systems can be installed individually or as a complete set, according to the operational needs.

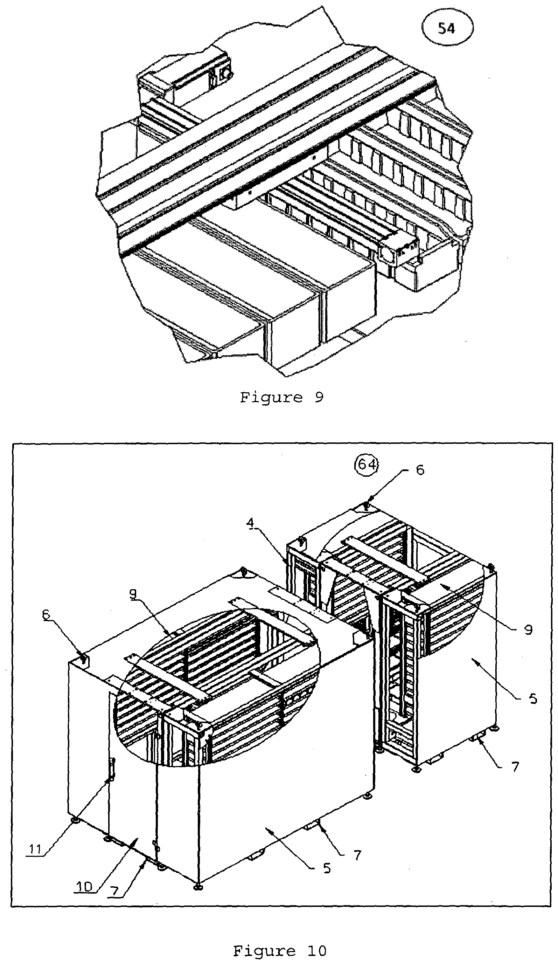

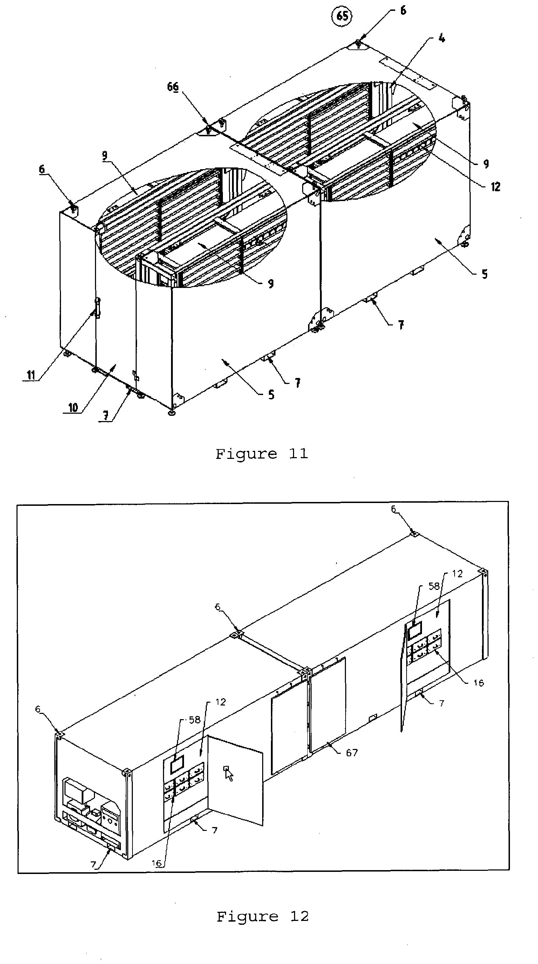

It is another objective of the present invention, to be fully modular allowing expansion for extra capacity. If a need for extra capacity arises, the present invention allows to continue with the original Unit, expanding with additional modules (64) (fig. 10) by coupling it and integrating with additional Units (65) (fig. 11), that will work as one with the computer controlled WMS, that also has inbuilt this expansion capability.

It is another objective of the present invention, as an additional version, to be able to control, monitor and register interior temperature and humidity with a self-contained system. The unit's interior can be a single environment controlled zone, or it can be divided into several different zones, with different temperature and humidity requirements. This feature is especially useful, but not exclusively, for pharmacies, blood banks, electronic parts and Art collections, among many others.

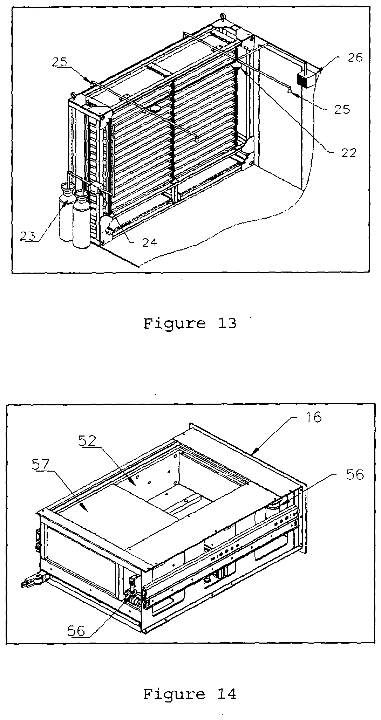

It is another objective of the present invention to be capable of autonomous fire detection and extinction (fig.13), using fire detectors (22) (e.g. smoke, temperature, UV or other) and a high pressure CO2 flooding system. The fire detectors are placed along the Unit, provided with internal and external audible alarms. The group of CO2 bottles (23) is placed on the top side of the Unit for easy access and maintenance. The CO2 fire extinction is activated either manually or automatically, but for safety reasons, the activation of the device (24) is only possible with the access doors closed.

It is another objective of the present invention to guarantee access control to the products stored in the Unit. The present invention allows access only to authorized users, via computer controlled log in, or biometric system. For the manual units without computer and software, access control to the Unit's interior is guaranteed via a mechanical locking system (11). During normal operation of the semi-automatic and fully-automatic units, it is impossible to access the interior of the Unit, unless with the Unit stopped for maintenance or emergency use. Access to the Unit is computer controlled by software log in, or biometric system. During operation the possibility of qualitative error is eliminated by allowing access only to one drawer / product at a time, together with a bar code reading system, effectively eradicating the possibility of qualitative error in replenishment or picking. In the semi-automatic Unit, only one product is available at a time through the drawers. In the fully automated Unit, only one order is available at a time through the drawers. Without product or order validation and closed drawers the Unit doesn't unlock the next drawer.

It is another objective of the present invention, to provide different access levels according to the stored products. The semi-automatic and fully automatic Units comprise a computer controlled software that allows setting safety levels per product, and the corresponding user access level. This feature is especially useful, but not exclusively, for Pharmacies with controlled drugs.

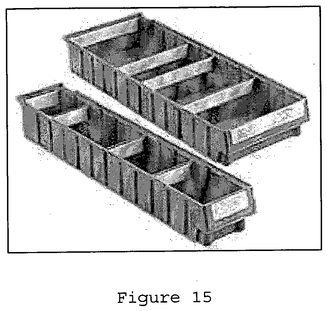

It is another objective of the present invention to manage and control selective access to individual zones of a UL (fig. 14) when placed inside a workstation drawer (16). With this system it is possible to guarantee the qualitative error free operation even when storing in the same UL, equipped with internal dividers (52) (fig.15), different products.

It is another objective of the present invention to allow controlled access to the Unit even in the event of a power failure or Unit malfunctioning. For that purpose, access to the Unit's interior is guaranteed via a mechanical locking system (11). This feature is especially useful, but not exclusively, for Pharmacies which must have access to the stored drugs in any event.

The proposed methods for replenishing the Unit's stock and retrieving the products vary according to the level of automation of the unit. For the manual Unit, the picker uses replenishment and picking lists. The list, on paper or electronic device, includes the product identification number, product description, location inside the Unit, quantity to be stored or picked, and bar code for optical validation. For better productivity, the picking method can consolidate orders in batches, as such when the picker is directed to a UL location, the actual quantity indicated for picking is the total of units of that product needed to fulfil the various consolidated orders. After the picking process the products will be deconsolidated and divided according to the orders. The capacity and location of each UL is controlled by the software. As the unit according to the invention comprises a Pick to Light system, there is no need for listing, the picker just follows the system's indications, the display bars (13) indicate where and how many units to pick from the ULs. Equally a consolidation of orders can be used, and bar code system for optical validation. The capacity and location of each UL is controlled by the software. For the semi-automatic system (fig. 7), the computer controlled Cartesian coordinate robot (14) retrieves the ULs (8) from the multiple locations at the shelving modules (9) and transfers them into a drawer (15) for the basic semi-automatic, or set of drawers (16), at the Unit workstation(s) (17) for controlled manual replenishment or picking, product by product. Equally, order consolidation and bar code validation processes can also be used. The capacity and location of each UL is controlled by the software. For the fully-automatic system (fig.8), the computer controlled Cartesian coordinate robot (14) retrieves the ULs from the multiple locations at the shelving modules and transfers them into a unitary process zone, where a further robot (53) picks the required quantities of each product placing them in a set of Order trays (OT) (55) divided by orders. Upon finishing an order the Cartesian robot (14) retrieves the OT and places it in a set of drawers (16) at the machine workstation(s) (17). Equally, order consolidation and bar code validation processes can also be used. The capacity and location of each UL is controlled by the software.

Document WO 2009/065145 A1 discloses a mobile unit for controlled product storage and dispensing according to the preamble of claim 1.

### Brief summary of the invention

The invention is defined by the independent claim. Embodiments of the invention will be apparent from the dependent claims. The present invention proposes a mobile unit for storage and dispensing according to claim 1 that provides a flexible and evolving solution, fully modular and with full mobility that is also capable of operate in all-weather, all- terrain, heavy duty operations. The unit can also be fully autonomous (fig.4), with an integrated power unit (49). It is also able to control, monitor and register interior temperature and humidity. The proposed Unit comprises computer means that guarantee access control to the products stored, as well as a mechanical locking system (11) that assures controlled access in the event of a power failure or Unit malfunction. The computer means also provide different access levels according to the stored products, using software that allows setting safety levels per product and the corresponding user access. The system manages and controls selective access to individual zones of a Unit Load (UL) (fig.14) when placed inside a workstation drawer (16). This feature guarantees the qualitative error free operation even when storing more than one type of products in the same UL, fitted with internal dividers (52). The Unit can comprise one or more independent workstations (17) that can be positioned at any place at the front and/or at the rear, and work simultaneously in any logistic flow.

The present invention can be autonomous, with an integrated power unit and integrated autonomous systems for power generation (49), compressed air generation (18), internal temperature control (19), and internal humidity control (20), among others. The Unit can comprise fire detection and extinction equipment, using fire detectors (22) and a high pressure CO2 flooding system. The CO2 fire extinction is activated either manually or automatically, but for safety reasons, the activation of the device (24) is only possible with the access doors closed. The proposed Unit can be presented either in standard form (fig. 3) or for heavy duty and all weather operations (fig. 4). The previously mentioned mobility of the Unit is also possible when loaded with products, due to the securing devices (35) (38) (44) for the Unit Loads (UL), that are able to maintain the loaded ULs and its contents in their assigned places.

In addition, in the heavy-duty form, standard external dimensions are used in order to be easily transported by land, sea or air.

The proposed system uses the mentioned capability of interior temperature control and humidity, as a way to support "Multi-temperature" with the possibility of creating different environments inside the same Unit, enabling the stock centralization of products with different ambient/environment requirements.

Being fully modular the Unit is able to be expanded, creating extra capacity. The present invention allows keeping the original Unit, coupling and integrating it with additional modules (64) (Fig. 10) or coupling it with other complete Units (65) (Fig. 11) that will then work as one. From the manual to the fully automatic operations, the Unit can have different and evolving picking/storing systems and methods.

In the manual version the software controls the multiple storage locations of the ULs inside the unit, optimizes and generates a replenishment/picking list to the operator. The unit accosrding to the invention comprises a Pick To Light (P2L) (Fig. 5) device that uses software controlled display bars (13), visually indicating the location and quantity to be replenished/picked. The unit according to the invention further comprises a computer controlled three axes Cartesian coordinate robotic system (14), that stores/picks the desired ULs, and place them in drawers (16) at the workstation(s) (17). For error free operation, the software only allows access just to one drawer at a time. The fully automatic system (Fig. 8) additionally uses a computer controlled two axes robotic system (53) that picks the desired products, and places the requested quantity in the order trays (OTs) (55) and then moves them to the drawers (16) at the workstation (s), the software allowing access just to one order at a time.

In short, with an affordable and simple base to start, the Unit has the possibility to evolve, increasing the capacity and/or becoming a fully automated system, always maintaining full mobility.

### Brief description of the drawings views

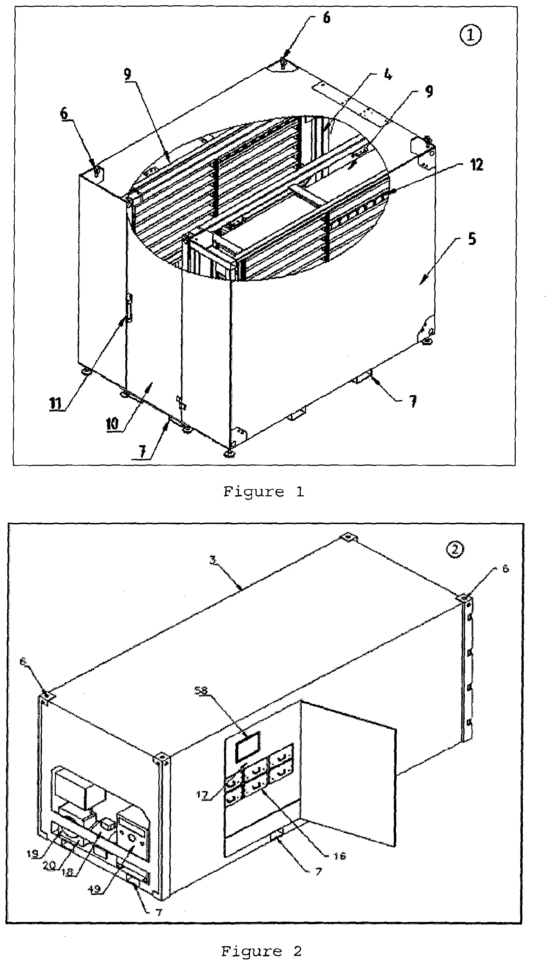

Fig. 1 - Standard manual mobile Unit
Fig. 2 - Heavy duty / all-weather Unit autonomous Unit
Fig. 3 - Standard manual mobile Unit
Fig. 4 - Heavy duty / all-weather autonomous mobile Unit
Fig. 5 - Standard manual assisted mobile Unit
Fig. 6 - Standard Basic Semi-automatic mobile Unit
Fig. 7 - Standard Semi-automatic mobile Unit
Fig. 8 - Standard Fully-automatic mobile Unit
Fig. 9 - Detail view of two axes Cartesian system
Fig. 10 - Expansion by integration of additional standard module
Fig. 11 - Expansion by interconnecting two Standard mobile units
Fig. 12 - Expansion by interconnecting two heavy duty mobile Units
Fig. 13 - Fire detection and extinction system
Fig. 14 - Unitizer drawer
Fig. 15 - Unit Loads with internal dividers
Fig. 16 - Horizontal manual UL securing device
Fig. 17 - Horizontal automatic UL securing devic
Fig. 18 - Vertical UL securing device
Fig. 19 - Manual actuation of the three axes Cartesian system
Fig. 20 - Drawer details
Fig. 21 - Drawer locking mechanism
Fig. 22 - Cold door opening system
Fig. 23 - Cold door operation

### Drawings' key:

1) Standard manual mobile Unit
2) Heavy duty and all weather mobile Unit
3) Heavy duty and all weather mobile Unit, with autonomous power
4) Unit structure
5) Unit casing
6) Pickup points
7) Forklift pocket
8) Unit Load (UL)
9) Modular shelving system
10) Access door
11) Locking system in the access door
12) Multiple storage locations of the ULs inside the Unit
13) P2L display
14) Three axes robotic system
15) Single drawer
16) Workstation drawer set
17) Workstation(s)
18) Compressed air generation
19) Internal temperature control
20) Internal humidity control
21) Large static drawer
22) Smoke detector
23) CO2 bottles
24) CO2 activation device
25) Nozzles
26) Vents
27) Vertical axis
28) Electric motor
29) Manual crank
30) Counterweight system
31) Horizontal shaft
32) UL guiding rail
33) Drawer locker
34) UL locker
35) Restraining bar
36) Brackets
37) Restraining pin
38) Folding canvas
39) Horizontal guiding rails
40) Canvas drum
41) Electric motor and gearbox
42) Soft rolling front lip
43) Steel cables
44) Vertical securing device
45) Spring loaded flexible thin metal sheet
46) Casing panels
47) Pick to light device
48) Displays
49) Generator
50) Quick release fasteners
51) Suction cup
52) Internal dividers of the ULs
53) Two axes Cartesian coordinate robot
54) Automated picking station
55) Order trays (OT)
56) Unitizer motor
57) Plastic mesh shutters
58) Touch screen computer
59) Compressor and condenser units
60) Mechanism for fastener operation
61) Back face of the extractor
62) Cold doors
63) Suction cup for cold doors
64) Additional module
65) Additional Unit
66) Top exterior panels
67) Top doors

### Description of the invention

The invention is defined by the independent claim 1. Embodiments of the invention will be apparent from the dependent claims. The present invention, proposes a fully mobile Unit system, for controlled product storage and dispensing, with autonomous operation and evolution capability regarding capacity and technology.

For straightforward transport the Unit comprises pickup points (6) for crane operation, and forklift pockets (7). The heavy duty and all weather Unit has standard external dimensions to be easily transported by land, sea or air.

The Unit has the option of being transported fully loaded, allowing an immediate entry into operation upon arrival to the new location. For this, uses securing devices (35) (38) (44) maintaining the loaded ULs (8) and its contents in their assigned places. The ULs are, usually, but not exclusively, plastic bins, which can hold any kind of materials, either solid or liquid, in the form of units, bulk, boxed, regular or irregular shapes, grains, powders or gels.

The present invention allows, the use of the Unit as a warehouse/dispenser inside of a building, with easily changing location, or its transport to another building or construction site, using the above mentioned riggings.

The present invention is also available in an all-weather, all-terrain version, to be fully capable of operation in remote sites. For further autonomous operation, the Unit is enhanced with independent and integrated systems for power generation (49), compressed air generation (18), internal temperature control (19) and internal humidity control (20). These autonomous systems can be installed individually or as a complete set, according to the operational needs.

On the subject of evolution, the Unit can evolve either in capacity or technology. In the technology area, the present invention is able to evolve from fully manual, to manually assisted, to basic semi-automatic, to semi-automatic or to a fully automatic version.

The Unit consists of a structure and casing, equipped with at least one access door (10) and at least one shelving module (9). The Unit is equipped with a computer controlled warehouse management system (WMS) integrated or not with an Enterprise Resource Planning (ERP). The Unit Loads (UL) are stored in a modular shelving system (9), with multiple storage locations arranged in modules/shelves/position, and adjustable to accommodate different UL sizes. According to the invention, the unit comprises a Pick to Light (P2L) device (47), controlled by a Warehouse Management System (WMS) and optionally integrated with the ERP, in the existing shelving modules.

The Unit comprises further a picking point consisting of a drawer (15), and a three axes Cartesian coordinate robot (14) that retrieves the ULs (8) from their multiple locations at the shelving modules (9) and transfers them into a drawer (15), for controlled manual picking product by product, managed by a computer and WMS optionally integrated with the ERP.

For higher volumes of work, the Unit can further evolve within the same base to a semi-automatic system, by replacing one or more casing panels (46), and part of the corresponding shelving modules by workstation(s) (17) complete with touch screen computer (s) (58) and set of drawers, with or without individual displays.

The unit comprises a three axes Cartesian coordinate robot (14) that retrieves the ULs (8) from the multiple locations at the shelving modules (9) and transfers them into a set of drawers (16) located at the workstation(s) (17), for controlled manual picking product by product, managed by a computer and WMS optionally integrated with the ERP.

The Unit can also evolve to a fully-automatic system, further using a generally known device, two axes Cartesian coordinate robot (53). The three axes Cartesian coordinate robot (14) retrieves the ULs from the multiple locations at the shelving modules, transferring them to an automated picking station (54) where the two axes Cartesian coordinate robot (53) makes the individual product picking, using a suction cup (51), or other device, and delivers them to the individual Order Trays (OT) (55). After picking, the ULs are retrieved from the automated picking station and returned to their locations by the three axes Cartesian coordinate robot. When an order is complete, the three axes Cartesian coordinate robot (14) extracts the OT from the automated picking station and delivers it to a set of drawers (16) at the workstation(s) (17), order by order, where the operator has access to only one drawer/order at a time.

The Unit is controlled by a computer and a Warehouse Management System (WMS) and optionally integrated with the ERP.

In what concerns capacity evolution, the present invention has a modular concept that allows easy expansion through the use of additional modules, or by the interconnection of several Units. For the additional modules, the expansion is carried by removing the top exterior panels and connecting the new modules (64) to the existing structure and reassembling the top exterior panels, working then as single larger Unit with the computer controlled WMS. The combination of several Units is carried top to top, by removing the top exterior panels and connecting the structures together, working then as single Unit with the computer controlled WMS.

For the semi-automatic and fully automatic Units, when expanding with new modules, a new horizontal axis is required. For coupling together top to top several semi- automatic or fully automatic Units the expansion is carried by removing the top exterior panels, or for heavy duty / all-weather Units opening the top doors (67), then bolting together the structures. The Units remain independent using a handover zone on top to transfer the ULs from Unit to Unit. Even though the Units remain independent, the software manages the multiple Units as one, making available the stored products at any Unit's workstation. The autonomous units (3) can only be placed on the tops of a group of Units (Fig. 11).

The mentioned systems for interior temperature and humidity control, allow the Unit's interior of being either a single environment controlled zone or to be divided into several zones, with different temperature and humidity requirements.

Furthermore, for safety and minimum damage in the event of an internal fire, the Unit may be equipped with a fire detection system, and a high pressure CO2 flooding system
allowing for early fire detection and extinction. The fire detection (22) are placed along the Unit, provided with internal and external audible alarms.

The fire detection system can be of the addressable type and connected to an existing fire detection network.

The Unit's internal fire extinction system (high pressure CO2 flooding system) uses nozzles (25) placed in the central aisle and in the difficult to reach zones behind the shelving modules. The CO2 fire extinction is activated either manually or automatically, but for safety reasons, the activation of the device (24) is only possible with the access doors closed.

The access to the Unit is restricted to authorized users and the level of access control increases as the system evolves to the semi and fully automatic versions.

The access control is guaranteed by an access door, equipped with a mechanical locking system (11), either with or without computer control.

In the semi and fully automatic versions, the access to the system is only given to authorized users, via computer controlled log, or biometric system.

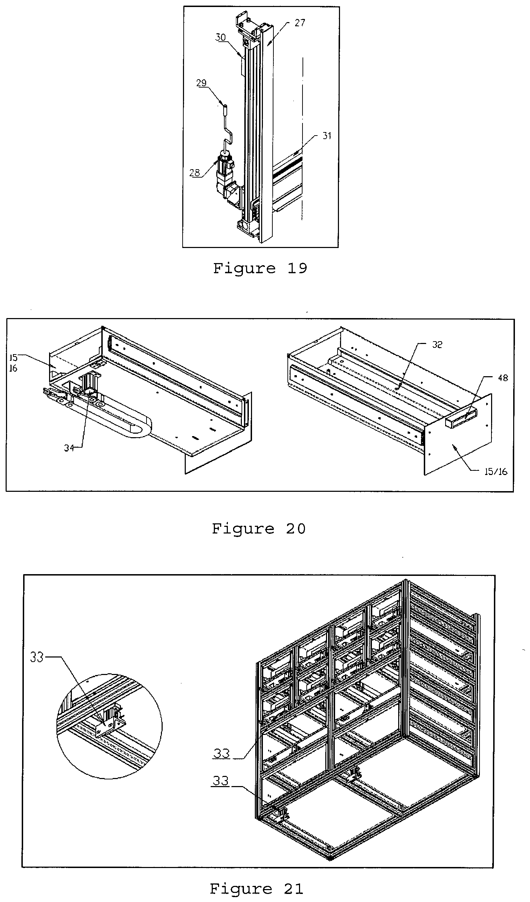

In the event of a power failure or Unit malfunction, controlled manual access is guaranteed by an access door (10), equipped with a mechanical locking system (11). To provide a better emergency access inside the Unit, the Cartesian axes system has an inbuilt manual operation of the vertical axis (Fig. 19), using a crank (29) actuation of the vertical axis (27) through the respective electric motor (28).

To reduce the manual effort, the horizontal shaft (31) has a counterweight system (30) that also has the advantage of keeping the axis in its position without requiring a blocking system, and enabling the use of a reduced power drive motor, saving cost and energy.

In addition to the general Unit's access control, the present invention can further restrict and control some products to pre-determined users, or level of users. In the manual and Pick to Light (P2L) versions, the restricted access to selected products uses a completely separated Unit, or a closed shelving module.

In the semi and fully automatic versions, the Unit comprises computer and control software that allows setting safety levels per product and the corresponding user or user level access.

The access control is made through the establishment of restricted areas or by software control, that doesn't allow access to the products without user authentication and does not allow access of certain users to certain products.

The proposed system further manages and controls selective access to individual zones of a UL when placed inside a workstation drawer (16). With this system it is possible to guarantee the qualitative error free operation even when storing more than one product within the same UL, equipped with internal dividers.

In the semi-automatic version, the present invention eliminates the possibility of quantitative and qualitative error, by allowing access to only one drawer/product at a time, together with a bar code reading system.

In the fully automatic version, the present invention eliminates the possibility of quantitative and qualitative error, by allowing access to only one drawer/order at a time, together with a bar code reading system.

The proposed system when working with the WMS, also makes a registry of all users' activities and all products movements, so that full traceability is guaranteed.

In order to fulfill the aforesaid objectives, it is proposed a system and method for an Evolving mobile Unit for controlled product storage and dispensing, as defined in the following claims.

### Detailed description of the invention

The invention is defined by the independent claim 1. Embodiments of the invention will be apparent from the dependent claims. The present invention is an Evolving mobile Unit for controlled product storage and dispensing, comprising a system that can evolve from fully manual, to manually assisted, to basic semi-automatic, to semi-automatic, or to fully automatic operation. The Unit can be built for any of the above stages, and evolve or be downgraded to any other stage. The evolving capacity is obtained from the use of a common modular structure (4) and casing (5). The products are stored within Unit Loads (UL) (8), usually, but not exclusively, plastic bins, and which can hold any kind of materials, either solid or liquid, in the form of units, bulk, boxed, regular or irregular shapes, grains, powders or gels:
- Manual Unit - According to the invention, the unit consists of a structure (4) and casing (5), equipped with at least one access door (10) and at least one shelving module (9). The Unit is equipped with a computer controlled warehouse management system (WMS) integrated or not with an Enterprise Resource Planning (ERP). The UL are stored in a modular shelving system (9), with multiple storage locations arranged in modules / shelves / position, and adjustable to accommodate different mixes of UL sizes.
- Manual assisted Unit - According to the invention, the unit comprises a Pick to Light device (47) incorporated into the shelving modules, controlled by the Warehouse Management System (WMS) and optionally integrated with the ERP. The displays (13) and contact profiles are mounted at the front of the shelves and connected to an interface module (49) communicating with the WMS.
- Basic Semi-automatic Unit - According to the invention, the unit comprises a picking point, usually a drawer, placed at the front or back of the Unit, and a three axes Cartesian coordinate robot (14) retrieving the ULs (8) from the multiple locations at the shelving modules (9) and transferring them into a drawer (15), for controlled manual picking, product by product, managed by the computer controlled WMS optionally integrated with the ERP. The Cartesian coordinate robot (14) extracts the ULs from the shelving modules using a standard suction cup (51), or other device, and delivers them to the drawer (15). And finally the Cartesian coordinate robot retrieves the UL from the drawer and returns it to the original location.
- Semi-automatic Unit- The Unit can evolve to a semi-automatic system (Fig. 7), by removing one or more casing panels (46), placed at the front or back of the Unit, and replacing them with one or more workstations (17) complete with a touch screen computer (58), a set of drawers, with or without individual displays (48). The shelving modules (9) behind the workstation(s) (17) are adjusted to accommodate the workstation drawers (16). The three axes Cartesian coordinate robot (14) retrieving the ULs (8) from the multiple locations at the shelving modules (9) and transferring them into a set of drawers (16) at the workstation (s) (17), for controlled manual picking, product by product, managed by the computer controlled WMS optionally integrated with the ERP. The Cartesian coordinate robot (14) extracts the ULs from the shelving modules using a standard suction cup (51), or other device, and delivers them to the drawers (16). And finally the Cartesian coordinate robot retrieves the UL from the drawer and returns it to the original location.
- Fully-automatic - The Unit can evolve to a fully- automatic system (Fig. 8), using a generally known device two axes Cartesian coordinate robot (14). The three axes Cartesian coordinate robot (14) retrieves the ULs (8) from the multiple locations at the shelving modules (9), transferring them to an automated picking station (54) where the two axes Cartesian coordinate robot (53) makes the individual product picking, using a suction cup, or other device, and delivers them to the individual Order Trays (OT) (55). After picking, the ULs are retrieved from the automated picking station and returned to their location by the three axes Cartesian coordinate robot (14). When an order is complete, the three axes Cartesian coordinate robot (14) extracts the OT from the automated picking station and delivers it to a set of drawers (16) at the workstation (s) (17), order by order, where the operator has access only to a drawer/order at a time. And finally the Cartesian coordinate robot retrieves the OT from the drawer and returns it to the original location on the automated picking station (54). The Unit is controlled by a computer and WMS and optionally integrated with the ERP.

The present invention is a fully mobile Unit, consisting of a lightweight (Fig. 3) or heavy-duty (Fig. 4) structure and exterior casing for standard use or for heavy duty and all weather operation. The proposed Unit comprises pickup points (6) for crane operation and forklift pockets (7), in order to be easy maneuverable and transported by land, sea or air. Additionally, for the same purpose, the heavy-duty/all-weather Unit is built according to standard container dimensions. The Unit can be transported loaded, allowing an immediate entry into operation upon arrival to the new location.

The present invention can be fully autonomous, using an independent power unit (49) and autonomous systems for compressed air generation (18), internal temperature control (19) and internal humidity control (20), among others.

The Unit construction allows for easy expansion by integrating new modules (64) or by interconnecting together several Units (Fig. 11). For the additional modules, the expansion is carried by removing the side exterior panels (66) and connecting horizontally the new modules (64) to the existing structure and reassembling the side panels, working then as a single larger Unit with the computer controlled WMS. The combination of several Units is carried horizontally top to top, by removing the side exterior panels and connecting the structures together (65), working then as a single Unit with the computer controlled WMS. For the semi-automatic and fully automatic Units, when expanding with new modules, a new horizontal axis is necessary.

For coupling together horizontally top to top several semi- automatic or fully automatic Units the expansion is carried by removing the side exterior panels, or for heavy duty / all-weather Units opening the top doors (67), then bolting together the structures. The Units remain independent using a handover zone on top to transfer the ULs from Unit to Unit. Even though the Units remain independent, the software manages the multiple Units as one, making available the stored products at any Unit's workstation. The autonomous units (3) can only be placed on the tops of a group of Units (Fig. 11).

The present invention avoids human error, and controls access by addressing several situations. The basic access control is guaranteed by allowing entrance into the Unit with a mechanical locking system. For the computer equipped versions, only after log in the system, either by password or biometrics, the user is allowed to operate with the Unit. Qualitative and quantitative human errors are addressed by controlling the access to the Unit and/or products.

The present invention can further restrict and control access to some products to pre-determined users, or level of users. The access control to sensible products, is made through the establishment of restricted areas or by software control, which does not allow access to the products without user authentication of a certain level, and does not allow access of certain users to certain products.

In the semi-automatic version, the present invention provides a safer access to the products of the Unit, eliminating the possibility of qualitative error, by allowing access to only one drawer/product at a time, together with a bar code reading system.

In the fully automatic version, the present invention provides a safer access to the products of the Unit, eliminating the possibility of quantitative and qualitative error, by allowing access to only one drawer/order at a time, together with a bar code reading system.

The proposed system also makes possible to know which user accessed a certain product, allowing a posterior control of the movement of products. In case of electrical power break or Unit failure, the controlled entrance to the Unit's content is guaranteed by access door(s) equipped with a mechanical locking system.

To provide a better emergency access inside the Unit, the Cartesian axes system (Fig. 19) has an inbuilt manual operation of the vertical axis (27), using crank (29) actuation through the respective electric motor (28). To reduce the manual effort, the vertical shaft (27) has a counterweight system (30) that also has the advantage of keeping the axis in its position without requiring a blocking system, and enabling the use of a reduced power drive motor.

For safety and minimum damage in the event of an internal fire, the Unit may be equipped with a fire detection system (22), (e.g. smoke, temperature, UV or other), allowing for early fire detection. The fire detectors are placed along the Unit, provided with internal and external audible alarms (Fig. 13).

The fire detection system can be of the addressable type and connected to an existing fire detection network. The Unit can also have an internal fire extinction system, using a high pressure CO2 flooding system, with nozzles (25) placed in the central aisle and in the difficult to reach zones behind the shelving modules.

The CO2 fire extinction is activated either manually or automatically, but for safety reasons, the activation of the device (24) is only possible with the access doors closed. Activating the CO2 fire extinction, triggers sequentially the following actions: cut the power to the Unit, activate CO2 warning light and horn, both self- powered, mechanical closure of the vents (26), opening of the CO2 bottles (23). The group of CO2 bottles is placed on the top side of the Unit for easy access and maintenance. When equipped with the CO2 fire extinction system the Unit has an airtight construction and closable vents, allowing safe use of the firefighting system even when the Unit is installed in small closed spaces.

A system that manages and controls selective access to individual zones of a UL (Fig. 14) when placed inside a workstation drawer (16). With this system it is possible to guarantee the qualitative error free operation even when storing within the same UL, equipped with internal dividers (52) (Fig. 15) different products.

The drawer is computer controlled and available to the semi-automatic Unit. The system manages the ULs with dividers like an extension of the locations of the shelving modules (9), the drawer is equipped with two plastic mesh shutters (57), or other, actuated by two electric motors (56) with gearboxes and sprockets. Each plastic cover is pulled in opposing directions the necessary stroke to expose only the selected location within the UL, and assuring the remaining locations are covered and inaccessible.

The system controls two independent covers, so as to allow the management of any size and number of transversal divisions of the ULs.

For delivering and retrieving of the ULs to the Unitizer the covers are at idle position, allowing for free movement of the ULs by the three axes Cartesian system. After delivery of a UL to the Unitizer the computer controls the position of the shutters, in order to allow physical access only to the desired location within the UL. When the shutters are in position the Unitizer drawer is ready for replenishment or picking, afterwards, when the Unitizer drawer is again closed and locked, the shutters return to idle position allowing the retrieving of the UL back to its location in the shelving modules.

The interaction of the picker with the semi-automatic and fully automatic units is performed at the workstation(s) (17). The workstation is equipped with a touch screen computer (58) for software operation and a set of no less than two workstation drawers (16). Each drawer can be equipped with a display system (48), acting as a visual indicator of which drawer to open, the quantity to pick and system messages. Workstation drawers - In the semi-automatic and fully automatic units, the drawers (Fig. 20) are part of the Workstation and during operation the ULs (8) are deposited and retrieved from its interior by the Cartesian axes system (14).

For bulky products the semi-automatic and fully automatic units, can also use large static drawers (21) located at the inferior zone of the shelving modules.

The drawers and static drawers are kept closed (Fig. 21) by a pneumatic locker (33), or other, and opened only one at a time, by the computer system. The workstation drawers and static drawers, are managed together, only being allowed to open one at a time.

The drawers have guiding rails at the bottom (32) to guide and accommodate different dimension ULs. The ULs are secured in place inside the drawers by a pneumatic locker (34).

Multiple workstations - The semi and fully automatic Units must have at least one workstation (17), up to a maximum equal to the number of shelving modules (9). The workstations can be located at any place, in the front or back of the Unit.

In the present invention the access to the Unit is restricted to authorized users and the level of access control increases as the system evolves to the semi and fully automatic versions.

In the manual and Pick to Light (P2L) versions, the access control is guaranteed by an access door (10), equipped with a mechanical locking system (11), either with or without computer control.

In the semi and fully automatic versions, the access to the system is only given to authorized users, via computer controlled log or biometric system.

Restricted access to selected products - The present invention has different levels of control, increasing according to the Unit's version.

In addition to the Unit's general access control, the present invention can further restrict and control some products to pre-determined users, or level of users.

In the manual and Pick to Light (P2L) versions, the restricted access to selected products uses a completely separated Unit, or a closed shelving module.

In the semi and fully automatic versions, the Unit comprises computer and control software that allows setting safety levels per product and user or user level, and making available some products or orders only to the required user level.

The Units functioning in semi-automatic or fully automatic operation, comprise a computer controlled software that includes the capability of simultaneously combining any logistic flow (inbound, outbound, inventory) in any of the workstations (17). As such, in a machine equipped with multiple workstations, it is possible to have, simultaneously, all the workstations running similar processes, or different ones, like a picking process running at workstation n°1, and at the same time, running a replenishment process at workstation n° 2 and even running an inventory at workstation n°3.

To allow stock centralization of products with different temperature requirements in one Unit, it can be internally divided into several zones, each with different temperature and humidity settings.

The system uses individual climate control systems for each zone, either with a central or multiple compressor and condenser units (19).

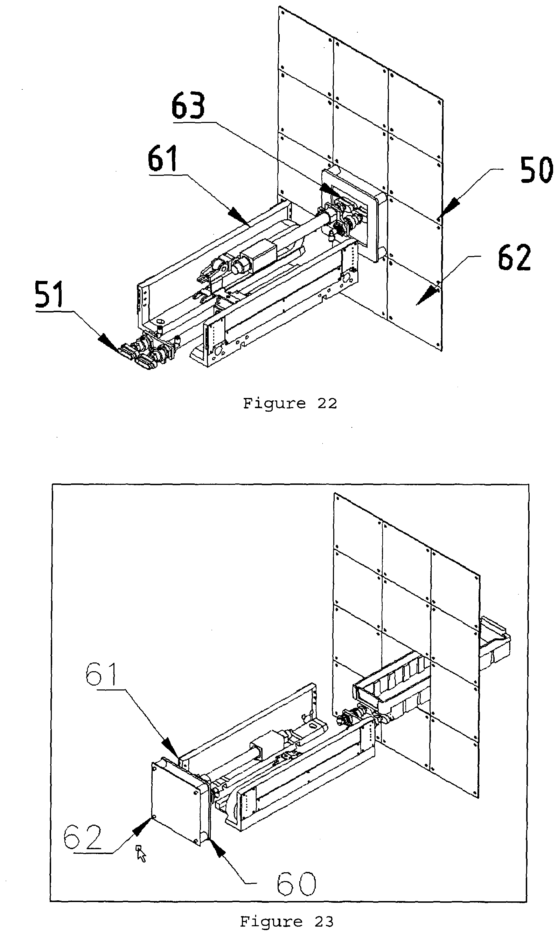

Cold doors - (Fig. 22) (Fig. 23)The shelving modules have individual cold doors (62) for each UL (8). The doors are locked with four quick release fasteners (50). The back face of the extractor (61) has a mechanism for fastener operation (60) and a suction cup (63) for pulling out and keeping the displaced door in the extractor. The extractor rotates 180° and proceeds to the normal retrieving of the UL, rotates again 180° and places the door in location and closes de fasteners, securing the door. The extractor then proceeds to the delivery drawer (16) or automated picking station (54). Upon concluded operation and retrieval of the UL from the drawer or automated picking station, the system repeats the above procedure for opening and closing the door, leaving the UL closed in its storing location.

The Heavy Duty and all weather Unit, is specially intended for any sort of outdoor operations under rough conditions, such as relief operations and humanitarian disasters, as well any other industrial, military or defence applications. As such, it must be able to withstand hard transport conditions, via land, sea or air, with a full load of products, ready to be dispensed upon arrival on site of the Unit.

To maintain the loaded ULs in their assigned places, two securing horizontal devices were developed, a manual and an automated system.

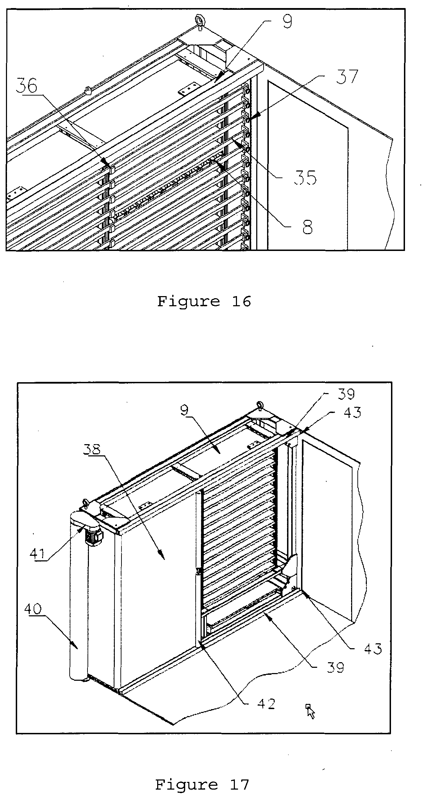

The manual device (Fig. 16), consists of a restraining bar (35) in front of each row of ULs, supported by brackets (36) and a restraining pin (37). In operation these bars are stored at the base of the Shelving Modules.

The automated device (Fig. 17), consists of a folding canvas (38) covering vertically the front of the Shelving Modules, the canvas is connected at one end to a vertical drum (40) operated via an electric motor and reduction gearbox (41), that can rotate in either direction, effectively closing the ULs for transportation or opening for operation. At the other end the canvas is connected to a vertical axis assuring the alignment of the canvas. The vertical axis and canvas, run on top and bottom parallel guiding rails (39). The vertical axis has a soft rolling front lip (42) and upon deployment gently pushes the ULs into position. The tension of the system is maintained via steel cables (43) working in loop with the canvas in the top and bottom guiding rails.

The Heavy Duty and all weather Unit, is specially intended for any sort of outdoor operations under rough conditions, such as relief operations and humanitarian disasters, as well any other industrial, military or defense applications. As such, it must be able to withstand hard transport conditions, via land, sea or air, with a full load of products, ready to be dispensed upon arrival on site of the Unit.

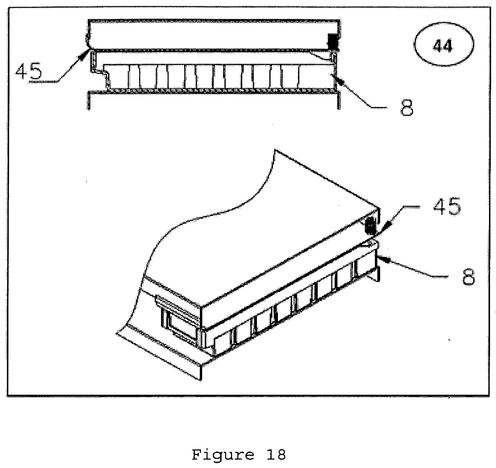

To vertically maintain the loaded ULs and its contents in its assigned places a vertical securing and covering device was developed. The device (fig. 18), consists of a spring loaded flexible thin metal sheet (45), mounted bellow the shelf and effectively covering the ULs bellow and assuring their contents remain in place.

In the semi-automatic Unit version, the number of lines of the same product and the quantity of units per line of product has a big impact on performance.

The actual human picking time of a product for a single customer/patient, or a few units of a product placed in the drawer, is faster than the robotic system to place another UL in the drawer buffer (16). In the other extreme, when picking multiple lines of the same product for different customers/patients, or big quantities of the same product placed in the drawer, the robotic system is faster than the picker, filling the drawer buffer and then stopping, waiting for the human element.

These two situations lead to unproductivity, with either the picker waiting for the robot, or the robot waiting for the picker.

This was overcome by the use of an algorithm that consolidates and analyses the received picking orders from the ERP, and sorts it by decreasing number of lines per product. Then prepares the working sequence by choosing first the largest multi pick, followed by a mono pick, followed by the smallest multi pick, followed by a mono pick, and then restarts the sequence over the remaining lines, until all lines are in sequence. If during the process it runs out of a particular type (multi or mono pick) the algorithm jumps to the next step.
Definitions, of received picking orders from the ERP:
- Multi pick: Product that has more than one picking line in the batch/order, to different customers/patients, independent of the total ordered quantity of the product
- Mono pick: Product that has a single picking line in the batch/order, to a single customer/patient, independent of the total ordered quantity of the product

Storing and picking method:
- Manual - The proposed method for replenishing
   the Unit's stock and retrieving the products for the manual Unit, when using the WMS, is based on the preparation and use of replenishment/picking lists by the picker. The list, on paper or on electronic device, includes the product identification number, product description, location inside the Unit, quantity to be stored or picked, and bar code for optical validation. For better productivity the picking method can consolidate orders in batches, as such when the picker is direct to a UL location, the actual quantity indicated for picking is the total of units of that product needed to fulfil the batch orders. After the picking process the products will be deconsolidated and divided according to the orders. The capacity and location of each UL is controlled by the software;
- Manual assisted - The proposed method for replenishing the Unit's stock and retrieving the products for the manual assisted Unit, consists of the interface between the WMS and ERP, through which the WMS receives the orders from the ERP. The picker then selects the orders to be fulfilled, and then just follows the system's indications, the display bars (13) indicating where and how much to pick/store from/to the ULs. Equally a consolidation of orders can be used, and bar code system for optical validation. The capacity and location of each UL is controlled by the software;
- Semi-automatic- The proposed method for replenishing the Unit's stock and retrieving the products for the semi-automatic system, consists of the interface between the WMS and ERP, through which the WMS receives the orders from the ERP. The picker then selects the orders to be fulfilled, and then the computer controlled Cartesian coordinate robot (14) retrieves the ULs from their multiple locations at the shelving modules (9) and transfers them into a drawer
   (15) for the basic semi-automatic, or set of drawers (16), at the Unit workstation(s) (17) for manual replenishment or picking, product by product. Equally, order consolidation and bar code validation processes can also be used. The capacity and location of each UL is controlled by the software. The possibility of qualitative error is eliminated, by allowing access to only one drawer/product at a time, together with a bar code reading system. The product quantity to pick from each UL/drawer is indicated on screen by the software, and also on the optional display above each drawer. Also the product validation can be performed on the touch screen or on the confirmation button at the side of the drawer display.
- Fully-automatic- The proposed methods for replenishing the Unit's stock and retrieving the products for the fully-automatic system, consists of the interface between the WMS and ERP, through which the WMS receives the orders from the ERP. The picker then selects the orders to be fulfilled, and then the computer controlled Cartesian coordinate robot (14) retrieves the ULs (8) from the multiple locations at the shelving modules and transfers them into a unitary picking zone (54), where a further robot, picks the required quantities of each product placing them in a set of Order Trays (OT) (55) divided by orders. Upon finishing an order the Cartesian robot (14) retrieves the OT and places it in a set of drawers (16) at the machine workstation(s) (17). Equally, order consolidation and bar code validation processes can also be used. The capacity and location of each UL is controlled by the software. The possibility of qualitative and quantitative error is eliminated, by automatic picking and allowing access to only one drawer/order at a time, together with a bar code reading system.

The foregoing description of the invention has been present for purposes of illustration and description. The scope of the invention is defined by the claims.

## Claims

1. Evolving mobile unit for controlled product storage and dispensing, comprising:
a) a common modular structure (4), that can evolve or be downgraded to any stage, from fully manual, to manually assisted, to basic semi-automatic, to semi-automatic, or to fully automatic operation;
b) a casing, either in lightweight (5) or heavy-duty all weather (3) form;
c) unit loads (8), usually, but not exclusively, plastic bins, stored in, at least one, shelving module (9), with multiple storage locations arranged by modules / shelves / position, and adjustable to accommodate different mixes of unit loads sizes;
d) at least one access door (10), for manual, emergency and maintenance access, equipped with a mechanical locking system (11) either with or without computer controlled access;
e) a computer controlled warehouse management system (WMS) integrated or not with an Enterprise Resource Planning (ERP) or Hospital Information System (HIS);
f) an operator picking point, usually a drawer (15) or set of drawers (16), placed at the front or back;
g) at least one casing panel (46), placed at the front or back, that can be replaced with one or more workstations (17) complete with a touch screen computer (58), a set of drawers, with or without individual displays (48);
h) a three axes Cartesian coordinate robot (14), retrieving the unit loads (8) from the multiple locations at the shelving modules (9), using a standard suction cup (51), or other device, and transferring them into the drawer (15), or to the set of drawers (16) at the workstations (17);
**characterized in that** the unit further comprises:
a) pickup points (6) for crane operation and forklift pockets (7) for full mobility and transportation by land, sea or air, in lightweight (5) or heavy-duty all weather (3) form;
b) a Pick to Light device (47) incorporated into the shelving modules (9), for manual assisted operation, controlled by the Warehouse Management System (WMS) and optionally integrated with the ERP;
c) displays (13) and contact profiles mounted at the front of the shelves and connected to an interface module (49) communicating with the WMS.

2. Evolving mobile unit according to claims 1, comprising:
a) a two axes Cartesian coordinate robot (53), wherein said three axes Cartesian coordinate robot (14) retrieves the unit loads (8) from the multiple locations at the shelving modules (9), transferring them to an automated picking station (54) where the two axes Cartesian coordinate robot (53) makes the individual product picking, using a suction cup, or other device, and delivers them to individual Order Trays (OT) (55).
c) at least one workstation (17), up to a maximum equal to the number of shelving modules (9).

3. Evolving mobile unit according to claims 1 and 2, comprising:
a) refrigerated shelving modules (9) have individual cold doors (62) for each unit load (8), which are locked with four quick release fasteners (50);
b) an extractor (61) whose back face has a mechanism for fastener operation (60) and a suction cup (63) for pulling out and keeping the displaced door in the extractor; the extractor then turns 180° and proceeds to the normal extraction and delivery of the unit load to the drawer (16) or automated picking station (54);
c) each shelving module, having independent climate control systems, either with a central or multiple compressor and condenser units (19), allowing for simultaneous different temperatures and humidity settings in various zones of the same unit.

4. Evolving mobile unit, according to the previous claims, comprising an independent power unit (49), an autonomous systems for compressed air generation (18), an internal temperature control (19), an internal humidity control (20), an a hydraulic pump for self-levelling system.

5. Evolving mobile unit according to the previous claims, comprises expansion by additional modules (64).

6. Evolving mobile unit according to claims 1 and 2, wherein a cartesian axes system has an inbuilt manual operation of the vertical axis (27) with a counterweight system (30), and using crank (29) actuation through the respective electric motor (28).

7. Evolving mobile unit according to the previous claims, comprising:
a) a fire detection system (22).
b) an internal fire extinction system, using a high pressure CO2 flooding system, with nozzles (25) placed in the central aisle and in the difficult to reach zones behind the shelving modules.
c) an airtight construction and closable vents, allowing safe use of the firefighting system even when the Unit is installed in small closed spaces.

8. Evolving mobile unit according to the previous claims, wherein the drawer is equipped with two plastic mesh shutters (57), or other, actuated by two electric motors (56) with gearboxes and sprockets.

9. Evolving mobile unit according to claim 2, wherein the workstation (17) is equipped with a touch screen computer (58) for software operation and a set of no less than two workstation drawers (16), and a method for order preparation using a interleaving algorithm, and drawer buffer

10. Evolving mobile unit according to the previous claims, wherein each drawer can be equipped with a display system (48) integrated with the WMS.

11. Evolving mobile unit according to the previous claims, comprising large static drawers (21) located at the inferior zone of the shelving modules (9).

12. Evolving mobile unit according to the previous claims, wherein the drawers and static drawers are kept closed by a pneumatic locker (33), or other, have guiding rails at the bottom (32) to guide and accommodate different dimension unit loads.

13. Evolving mobile unit according to claim 1, wherein the unit loads (8) are secured in place inside the drawers by a spring loaded cover plate (34).

14. Evolving mobile unit according to claim 1, comprises a restraining bar (35) in front of each row of unit (8), supported by brackets (36) and a restraining pin (37).

15. Evolving mobile unit according to claim 1, comprising:
a) a folding canvas (38)covering vertically the front of the shelving modules (9), wherein the canvas is connected at one end to a vertical drum (40) operated via an electric motor and reduction gearbox (41), wherein at the other end the canvas (38) is connected to a vertical axis assuring the alignment of the canvas, wherein the vertical axis has a a soft rolling front lip (42) ;
b) steel cables (43) working in loop with the canvas in the top and bottom guiding rails.

## Patentansprüche

1. Entwickelnde mobile Einheit für kontrollierte Wareneinlagerung und Dosierung, umfassend:
a) eine gemeinsame modulare Struktur (4), welche sich auf jede Stufe entwickelt oder zurückgestuft werden kann, von ganz manuellem, bis zu manuell unterstützt, bis zu grundsätzlich halbautomatisch, bis zu halbautomatisch, oder bis zu voll automatischem Betrieb;
b) ein Gehäuse, entweder in Leichtgewicht- (5) oder durch Allwetterschwerlastform (3);
c) Ladeeinheiten (8), meistens, aber nicht ausschließlich, Plastikbehälter, gelagert in, mindestens einem Regalmodul (9), mit vielfachen Lagerplätzen, die nach Modulen / Regalen / Lagen angeordnet, und einstellbar sind, um verschiedene Kombinationen von Größen von Ladeeinheiten aufzunehmen;
d) mindestens eine Zugangstür (10), für manuellen, Notfall- und Wartungszugang, ausgerüstet mit einem mechanischen Verriegelungssystem (11) entweder mit oder ohne computergesteuertem Zugang;
e) ein computergesteuertes Warehouse Management System (WMS) integriert oder nicht mit einem Enterpriste Resource Planning (ERP) oder Hospital Information System (HIS);
f) eine bedienbare Abgabestelle, normalerweise eine Schublade (15) oder eine Reihe von Schubladen (16), vorne oder hinten platziert;
g) mindestens eine Gehäuse-Platte (46), vorne oder hinten platziert, welche durch ein oder mehrere Arbeitsplätze (17) ersetzt werden kann, und mit einem Touchscreen-Computer (58), eine Reihe von Schubladen, mit oder ohne individuellen Anzeigen (48) komplett ist;
h) ein kartesischer Koordinatenroboter (14) mit drei Achsen, welcher die Ladeeinheiten (8) von den verschiedenen Plätzen an den Regalmodulen (9) abruft, indem er einen standardmäßigen Saugnapf (51) nutzt, oder anderes Gerät, und diese in die Schubladen (15), oder die Reihe von Schubladen (16) an den Arbeitsplätzen (17) verlagert;
**dadurch gekennzeichnet, dass** die Einheit weiterhin folgendes umfasst:
a) Sammelstellen (6) für Kranbetrieb und Gabelstaplertaschen (7) für volle Mobilität und Transport per Land, See oder Luft durch Leichtgewicht- (5) oder durch Allwetterschwerlastform (3);
b) eine Pick-to-Light-Vorrichtung (47) in die Regalmodule (9) eingebaut, für manuell unterstützten Betrieb, gesteuert durch das Warehouse Management System (WMS) und wahlweise mit dem ERP integriert;
c) Anzeigen (13) und Kontaktprofile vor den Regalen montiert und zu einem Interface-Modul (49) verbunden, der mit den WMS kommuniziert.

2. Entwickelnde mobile Einheit nach Anspruch 1, umfassend:
a) einem kartesischen Koordinatenroboter (53) mit zwei Achsen, worin der besagte kartesische Koordinatenroboter (14) mit drei Achsen die Ladeeinheiten (8) von den verschiedenen Plätzen an den Regalmodulen (9) abruft, und diese an eine automatisierte Aufnahmestation (54) übergibt, wo der kartesische Koordinatenroboter (53) mit zwei Achsen die individuellen Produkte einsammelt, indem dieser einen Saugnapf, oder anderes Gerät verwendet, und diese an individuelle Order Trays (OT) (55) liefert.
c) mindestens ein Arbeitsplatz (17), bis zu einem Höchstwert von der Anzahl an Regalmodulen (9).

3. Entwickelnde mobile Einheit nach Ansprüchen 1 und 2, umfassend:
a) gekühlten Regalmodulen (9) mit individuellen Kühltüren (62) für jede Ladeeinheit (8), welche mit vier Schnellverschlüssen (50) verriegelt sind;
b) ein Extraktor (61), dessen Rückseite ein Mechanismus für Verschlussbetrieb (60) und einen Saugnapf (63), um abzuziehen und die verschobene Tür in dem Extraktor zu halten, hat; der Extraktor dreht sich danach um 180° und geht zur normalen Extraktion und Lieferung der Ladeeinheit and die Schublade (16) oder automatisierte Aufnahmestation (54) vor;
c) jedes Regalmodul, hat unabhängige Klimakontrollsysteme, entweder mit einem zentralen oder vielfachen Kompressor-Kondensatoren-Einheiten (19), welche gleichzeitig verschiedene Temperaturen und Feuchtigkeitseinstellungen in verschiedenen Bereichen der selben Einheit erlauben.

4. Entwickelnde mobile Einheit nach vorhergehenden Ansprüchen, welche eine unabhängige Leistungseinheit (49), ein autonomes System für Drucklufterzeugung (18), eine interne Temperaturkontrolle (19), eine interne Feuchtigkeitskontrolle (20), und eine Hydraulikpumpe für selbst nivellierendes System umfasst.

5. Entwickelnde mobile Einheit nach vorhergehenden Ansprüchen, welche durch zusätzliche Module (64) einen Ausbau vorsieht.

6. Entwickelnde mobile Einheit nach Ansprüchen 1 und 2, worin ein kartesisches Achsen-System einen eingebauten manuellen Betrieb der vertikalen Achse (27) hat, mit einem Gegengewichtssystem (30), und mit einer Kurbelbetätigung (29) durch den jeweiligen Elektromotor (28) .

7. Entwickelnde mobile Einheit nach den vorhergehenden Ansprüchen, umfassend:
a) eine Brandmeldeanlage (22).
b) ein internes Feuerlöschsystem, welches Hochdruck CO₂ Überschwemmungssystem nutzt, mit Düsen (25), die im Mittelgang und in den Bereichen hinter den Regalmodulen, die schwer zu erreichen sind, angebracht sind.
c) eine luftdichte Konstruktion und verschließbare Luftlöcher, welche eine sichere Anwendung der Feuerlöschanlage erlauben, auch dann, wenn die Einheit in kleinen geschlossenen Räumen montiert wird.

8. Entwickelnde mobile Einheit nach den vorhergehenden Ansprüchen, worin die Schublade mit zwei Maschenklappen aus Plastik (57) ausgestattet ist, oder andere, die von zwei Elektromotoren (56) mit Getriebe und Kettenräder getätigt werden.

9. Entwickelnde mobile Einheit nach Anspruch 2, worin der Arbeitsplatz (17) mit einem Touchscreen-Computer (58) für Softwarebedienung und mit einer Reihe von nicht weniger als zwei Arbeitsplatzschubladen (16) ausgestattet ist, und einem Verfahren für Bestellungsvorbereitung mit einem Verschachtelungsalgorithmus und Schubladenpuffer.

10. Entwickelnde mobile Einheit nach den vorhergehenden Ansprüchen, worin jede Schublade mit einem Anzeigesystem (48) mit integriertem WMS ausgestattet sein kann.

11. Entwickelnde mobile Einheit nach den vorhergehenden Ansprüchen, welche große statische Schubladen (21) umfasst, welche sich im unteren Bereich der Regalmodule (9) befinden.

12. Entwickelnde mobile Einheit nach den vorhergehenden Ansprüchen, worin die Schubladen und die statischen Schubladen durch ein pneumatischen Spind (33), oder andere, zugehalten werden, mit Führungsschienen am Boden (32), um Ladeeinheiten von verschiedenen Dimensionen zu führen und aufzunehmen.

13. Entwickelnde mobile Einheit nach Anspruch 1, worin die Ladeeinheiten (8) durch eine gefederte Abdeckplatte (34) im Inneren der Schubladen an einer Stelle gesichert werden.

14. Entwickelnde mobile Einheit nach Anspruch 1, umfassend eine Haltestange (35) vor jeder Reihe der Einheit (8), die von Klammern (36) und einem Haltestift (37) gestützt werden.

15. Entwickelnde mobile Einheit nach Anspruch 1, umfassend:
a) eine faltbare Leinwand (38), welche senkrecht die Vorderseite der Regalmodule (9) deckt, worin die Leinwand an einem Ende zu einer vertikalen Walze (40) verbunden ist, die durch ein Elektromotor und Untersetzungsgetriebe (41) getätigt wird, worin am anderen Ende die Leinwand (38) zu einer vertikalen Achse verbunden ist und so die Ausrichtung der Leinwand gewährleistet, worin die vertikale Achse eine weiche rollende Frontlippe (42) hat;
b) Stahlkabel (43), die in einer Schlaufe mit der Leinwand in den oberen und unteren Führungsschienen funktionieren.

## Revendications

1. Unité mobile évolutive permettant un stockage et une distribution contrôlés de produits, qui comprend :
a) une structure commune modulaire (4), qui peut évoluer ou revenir en arrière à toute étape, en passant d'un fonctionnement entièrement manuel à un fonctionnement assisté manuellement, semi-automatique de base, semi-automatique ou entièrement automatique ;
b) un boîtier d'un matériau léger (5) ou résistant tous temps (3) ;
c) des unités de charge (8), généralement mais pas exclusivement des bacs en plastique, stockées dans au moins un module de rayonnage (9), avec de multiples emplacements de stockage disposés par modules / rayons / position, et réglables de sorte à recevoir des mélanges de différentes dimensions d'unités de charge ;
d) au moins une porte d'accès (10) pour l'accès manuel, d'urgence et d'entretien, équipée d'un système de verrouillage mécanique (11) avec ou sans accès contrôlé par ordinateur ;
e) un système de gestion d'entrepôt contrôlé par ordinateur (Warehouse Management System - WMS) intégré ou non avec un système de planification de ressources d'entreprise (Entreprise Resource Planning - ERP) ou un système d'information hospitalier (Hospital Information System - HIS) ;
f) un point de prélèvement de l'opérateur, normalement un tiroir (15) ou une cassette de tiroirs (16) placé à l'avant ou à l'arrière ;
g) au moins un panneau de boîtier (46), placé à l'avant ou à l'arrière, qui peut être remplacé par une ou plusieurs stations de travail (17) avec un ordinateur à écran tactile (58), une cassette de tiroirs, avec ou sans affichage individuel (48) ;
h) un robot à trois axes à coordonnées cartésiennes (14), qui récupère les unités de charge (8) des multiples emplacements dans les modules de rayonnage (9), en utilisant une ventouse standard (51) ou un autre dispositif, et les transfère au tiroir (15) ou à la cassette de tiroirs (16) aux stations de travail (17) ;
**caractérisée en ce que** l'unité comprend en outre :
a) des points de prélèvement (6) pour l'opération d'une grue (6) et des poches (7) pour un chariot élévateur à fourche (7) pour une pleine mobilité et le transport par terre, mer ou air, sous une forme légère (3) ou résistante tous temps (3) ;
b) un dispositif de prélèvement par signaux lumineux (47) incorporé dans les modules de rayonnage (9) pour le fonctionnement assisté manuellement, contrôlé par le système de gestion d'entrepôt (WMS) et intégré facultativement avec le système de planification de ressources d'entreprise (ERP) ;
c) des affichages (13) et des profils de contact montés à l'avant des rayons et connectés à un module d'interface (49) qui communique avec le système de gestion d'entrepôt contrôlé (WMS).

2. Unité mobile évolutive selon la revendication 1, qui comprend :
a) un robot à deux axes à coordonnées cartésiennes (53), où ledit robot à trois axes à coordonnées cartésiennes (14) récupère les unités de charge (8) des multiples emplacements dans les modules de rayonnage (9) et les transfère à une station de prélèvement automatisée (54), où le robot à deux axes à coordonnées cartésiennes (53) fait le prélèvement des produits individuels en utilisant une ventouse ou un autre dispositif et les livre à des Bacs de Commande (BC) individuels (55) ;
c) au moins une station de travail (17), jusqu'à un maximum égal au nombre de modules de rayonnage (9).

3. Unité mobile évolutive selon les revendications 1 et 2, qui comprend :
a) des modules de rayonnage (9) réfrigérés ayant des portes frigorifiques individuelles (62) pour chaque unité de charge (8), lesquelles sont verrouillées au moyen de quatre fermetures à ouverture rapide (50) ;
b) un extracteur (61) dont la face arrière est dotée d'un mécanisme (60) pour l'opération des fermetures et d'une ventouse (63) pour retirer et maintenir la porte déplacée dans l'extracteur ; l'extracteur tourne ensuite de 180° et procède normalement à l'extraction et à la livraison de l'unité de charge au tiroir (16) ou à la station de prélèvement automatisée (54) ;
c) chaque module de rayonnage ayant un système de climatisation indépendant, avec une unité de compresseur et de condenseur centrale ou des unités multiples, ce qui permet simultanément des températures et des réglages d'humidité différents dans les diverses zones de la même unité.

4. Unité mobile évolutive selon les revendications précédentes, qui comprend une unité de puissance indépendante (49), un système autonome de génération d'air comprimé (18), un régulateur de température interne (19), un régulateur d'humidité interne (20) et une bombe hydraulique pour un système d'auto-nivellement.

5. Unité mobile évolutive selon les revendications précédentes comprenant l'expansion au moyen de modules supplémentaires (64).

6. Unité mobile évolutive selon les revendications 1 et 2, où un système d'axes cartésiens comporte l'opération manuelle intégrée de l'axe vertical (27) avec un système interne de contrepoids (30), en utilisant l'actionnement d'une manivelle (29) au moyen du moteur électrique respectif (28) .

7. Unité mobile évolutive selon les revendications précédentes, qui comprend :
a) un système de détection d'incendie (22) ;
b) un système interne d'extinction d'incendie qui utilise un système d'inondation de CO2 à haute pression, avec des buses (25) placées dans le couloir central et dans les zones d'accès difficile derrière les modules de rayonnage ;
c) des fentes de construction étanche et refermables, permettant l'utilisation sûre du système d'extinction d'incendie même lorsque l'unité est installée dans des espaces restreints fermés.

8. Unité mobile évolutive selon les revendications précédentes, où le tiroir est équipé de deux volets de filet en plastique (57), ou autre, actionnés par deux moteurs électriques (56) avec des boîtes d'engrenages et des pignons.

9. Unité mobile évolutive selon la revendication 2, où la station de travail (17) est équipée d'un ordinateur à écran tactile (58) pour l'opération du logiciel et d'une cassette d'au moins deux tiroirs (16), et d'une méthode pour la préparation de commandes au moyen d'un algorithme d'entrelacement, et d'une butée de tiroir.

10. Unité mobile évolutive selon les revendications précédentes, où chaque tiroir peut être équipé d'un système d'affichage (48) intégré avec le système de gestion d'entrepôt (WMS).

11. Unité mobile évolutive selon les revendications précédentes, qui comprend de grands tiroirs fixes (21) situés dans la zone inférieure des modules de rayonnage (9).

12. Unité mobile évolutive selon les revendications précédentes, où les tiroirs et les tiroirs statiques sont maintenus fermés au moyen d'un verrou pneumatique (33), ou autre, ayant des rails de guidage au fond (32) pour guider et loger les unités de charge de dimensions différentes.

13. Unité mobile évolutive selon la revendication 1, où les unités de charge (8) sont fixées en place à l'intérieur des tiroirs au moyen d'une plaque de recouvrement à ressorts (34) .

14. Unité mobile évolutive selon la revendication 1, qui comprend une barre de retenue (35) devant chaque rangée de l'unité (8), soutenue par des supports (36) et une broche de retenue (37).

15. Unité mobile évolutive selon la revendication 1, qui comprend :
a) une toile pliante (38) qui couvre verticalement l'avant des modules de rayonnage (9), où la toile (38) est liée à une extrémité à un tambour vertical (40) actionné par un moteur électrique et une boîte d'engrenages de réduction (41), où la toile (38) est liée à l'autre extrémité à un axe vertical qui assure l'alignement de la toile, où l'axe vertical comporte un rebord avant de roulement doux (42) ;
b) des câbles en acier (43) qui fonctionnent en boucle avec la toile dans les rails de guidage supérieur et inférieur.
